# EUROPÄISCHE PATENTSCHRIFT

(11) **EP 0 892 252 B1**
(45) Veröffentlichungstag und Bekanntmachung des Hinweises auf die Patenterteilung: **21.12.2011**
(21) Anmeldenummer: 98118525.9
(22) Anmeldetag: 04.06.1996
(51) Int. Cl.: G01F 1/00, G01F 1/58

(54) **Magnetisch-induktiver Durchflussaufnehmer mit einer galvanischen Elektrode**
Galvanic electrodes of electromagnetic flow meters
Electrodes galvaniques des débimètres électromagnétiques

(30) Priorität: 18.10.1995 EP 95116405
(43) Veröffentlichungstag der Anmeldung: 20.01.1999
(62) Teilanmeldung aus: 96108893.7
(73) Patentinhaber: Endress + Hauser Flowtec AG, 4153 Reinach BL 1 (CH)
(72) Erfinder: Hafner, Peter, Dr., 4410 Liestal, BL (CH); Schäfer, Robert, Dr., 4108 Witterswil, BL (CH); Unterseh, Roland, 68300 Saint Louis (FR)
(74) Vertreter: Andres, Angelika Maria

(56) Entgegenhaltungen:
- GB-A- 1 153 295
- GB-A- 2 047 409
- GB-A- 2 057 692
- US-A- 4 773 275
- US-A- 5 095 759

## Beschreibung

Die Erfindung betrifft zu magnetisch-induktiven Durchflußmessern gehörende Durchflußaufnehmer mit mindestens einer galvanischen Elektrode.

Mit magnetisch-induktiven Durchflußmessern läßt sich bekanntlich der Volumendurchfluß einer elektrisch leitenden Flüssigkeit, die in einem Meßrohr fließt, messen. Der die Flüssigkeit berührende Teil des Meßrohrs ist i.a. elektrisch nicht-leitend, damit eine nach dem Faraday'schen Induktionsgesetz von einem das Meßrohr durchsetzenden Magnetfeld in der Flüssigkeit induzierte elektrische Spannung nicht kurzgeschlossen wird.

Metall-Meßrohre sind daher üblicherweise innen mit einer elektrisch nicht-leitenden Schicht versehen und auch i.a. nicht-ferromagnetisch; bei vollständig aus einem Kunststoff oder aus einer Keramik, insb. Aluminiumoxid-Keramik, bestehenden Meßrohren ist die elektrisch nicht-leitende Schicht demgegenüber nicht erforderlich.

Die erwähnte induzierte Spannung wird mittels mindestens zwei galvanischen, also von der Flüssigkeit an einer Stirnfläche benetzten, oder mittels mindestens zwei kapazitiven, also z.B. innerhalb der Wand des Meßrohrs angeordneten, Elektroden abgegriffen, die im einfachsten Fall diametral einander gegenüberliegend so angeordnet sind, daß ihr gemeinsamer Durchmesser senkrecht zur Richtung des erwähnten Magnetfelds ist.

Galvanische Elektroden sind üblicherweise in eine Bohrung in der Wand des Durchflußaufnehmers flüssigkeitsdicht eingesetzt. Dies gelingt z.B. nach der JP-A 4 - 290 919, insb. Fig. 6, dadurch, daß ein Elektrodenschaft der Elektrode einerseits einen kleineren Durchmesser als die Bohrung aufweist, der Elektrodenschaft andererseits jedoch mit mehreren Dichtlippen versehen ist. Problematisch dabei ist jedoch, daß durch das Einbringen der Elektrode sich mechanische Spannungen im Material ergeben, in das die Bohrung eingebracht ist oder mit dem sie ausgekleidet ist.

Solche mechanischen Spannungen führen im Falle von Kunststoff dazu, daß dieser "fließt", d.h. der der mechanischen Spannung ausgesetzte Teil des Kunststoffs weicht in spannungsfreie Bereiche, insb. zum Inneren des Meßrohrs hin, aus und bildet dort Vorwölbungen, die den Durchmesser des Meßrohrs örtlich verringern und somit das Strömen der Flüssigkeit unzulässig beeinflussen. Dies ließe sich dadurch reduzieren, daß die Dichtlippen nur im flüssigkeits-abgewandten Teil der Bohrung vorgesehen werden.

Im Bereich zwischen der benetzten Stirnfläche und der am nächsten liegenden Dichtlippe ist die vorbeschriebene Elektrode nicht vollständig dicht, da sich dort zwischen der Innenwand der Bohrung und der Mantelfläche des Elektrodenschafts ein hinsichtlich seiner Wirkung bisher unbeachteter Spalt befindet.

Wie Untersuchungen gezeigt haben, dringt die Flüssigkeit in diesen Spalt in Abhängigkeit von ihrem Druck und/oder von ihrer Temperatur und/oder von ihrem Zustand und/oder von ihrer Art bzw. chemischen Zusammensetzung mehr oder weniger weit ein. Dadurch hat die Elektrode eine zeitlich nicht konstante Benetzungsfläche und demzufolge auch eine zeitlich nicht konstante elektrische Impedanz.

Dies bedingt, daß der bei jeder galvanischen Elektrode a priori schon vorhandenen elektrochemischen Störspannung ein zusätzlicher, zeitlich nicht konstanter Störspannungs-Anteil überlagert wird. Dieser ist jedoch mit an sich üblichen Kompensationsmaßnahmen, wie sie z.B. in der US-A 43 82 387 und der US-A 44 22 337 beschrieben sind, nicht vollständig beherrschbar.

Die in der GB-A 11 53 295, in der GB-A 20 47 409 und in der GB-A 20 57 692 beschriebenen Elektroden versuchen das Dichtheitsproblem des Elektrodenschafts durch Maßnahmen zu lösen, die mit denen der obigen JP-A vergleichbar sind.

So ist bei der GB-A 11 53 295 eine die Elektrode aufnehmende Öffnung des metallischen Meßrohrs nach außen durch einen angeschweißten Ansatz verlängert, in den hinein sich der elektrisch nicht-leitende Teil, der sogenannte Liner, erstreckt. Der Elektrodenschaft ist mit einem geringfügig konisch zulaufenden Isolierteil umgeben, das mittels einer Preßpassung im Ansatz befestigt ist und somit die Stirnfläche gegen den Elektrodenschaft abzudichten sucht.

Der durch die Preßpassung auf den Liner ausgeübte Druck kann somit ebenfalls dessen oben erwähnte Vorwölbung bewirken, zumal die Stelle des größten Drucks sich kurz hinter der Stirnfläche befindet.

Bei der Elektrode der GB-A 20 47 409 ist deren Stirnfläche zu einem Elektrodenkopf erweitert, an dessen vom Lumen des Meßrohrs abgewandter Hinterseite eine umlaufende Kralle ausgebildet ist, die das Material des Liners in die einen größeren Durchmesser als der Elektrodenkopf aufweisende Öffnung hineinzieht. Diese auf Zug beanspruchte Stelle des Liners ist aber nicht ausreichend temperaturwechselbeständig.

Auch die Elektrode nach der GB-A 20 57 692 hat einen Elektrodenkopf mit erweitertem Durchmesser, der den Liner in die Öffnung für den Elektrodenschaft zieht, so daß die eben erwähnte Temperaturwechsel-Beständigkeit an dieser Stelle ebenfalls schlecht ist.

Ferner hat die Elektrode nach dieser GB-A 20 57 692 einen in eine zentrale Längsbohrung des Elektrodenschafts mehr oder weniger dicht eingesetzte, becherförmige Hülse, von der die Außenseite ihres Bodens mit der Stirnfläche der Elektrode fluchtet, so daß sich eine durchgehende Vollstirnfläche ergibt.

Allerdings scheint nach den Fig. 3, 5 und 8 dieser GB-A 20 57 692 dem Spalt zwischen der Hülse und der Elektrode keine Bedeutung beigemessen zu werden, denn in Fig. 3 ist kein Spalt, dagegen ist in den Fig. 5 und 8 ein enger Spalt gezeichnet, ohne daß die Beschreibung ihn erwähnt oder erläutert. Aufgrund der gezeichneten Länge und Enge dieses Spaltes kann angenommen werden, daß Kapillarkräfte wirken und somit die Flüssigkeit in Abhängigkeit von den Betriebsbedingungen und ihrem Zustand mehr oder weniger weit in den Spalt eindringt. Somit liegt auch hier wie bei der Elektrode nach der eingangs erwähnten JP-A 4 - 290 919 eine konstante Benetzungsfläche der Elektrode nicht vor.

Die im unabhängigen Anspruch 1 und den abhängigen Ansprüchen 2 und 3 definierte Erfindung dient der Lösung dieser aus dem referierten Stand der Technik sich ergebenden Gesamtproblematik, also der Schaffung einer praktisch absolut dichten Elektrode mit hochkonstanter Benetzungsfläche.

Die Erfindung wird nun anhand der einzigen Figur der Zeichnung näher erläutert, in der ein Ausführungsbeispiel dargestellt ist.

In der Figur ist jeweils ausschnittsweise und zur besseren Erkennbarkeit der Details nicht maßstäblich ein Meßrohr 1 eines Durchflußaufnehmers eines magnetisch-induktiven Durchflußmessers gezeigt. Es umfaßt ein Metallrohr 11 und einen eine darin strömende, elektrisch leitende Flüssigkeit berührenden Teil 12, deren Volumendurchfluß zu messen ist. Der Teil 12 ist elektrisch nicht-leitend, kann also z.B. aus einem geeigneten Kunststoff oder einem geeigneten Kautschuk bestehen.

Es kann auch ein einstückiges elektrisch nicht-leitendes Meßrohr, also ein vollständig aus einem geeigneten Kunststoff, einem geeigneten Kautschuk oder einer geeigneten Keramik bestehendes Meßrohr, verwendet werden, wenn dessen Wandstärke zur Aufnahme einer galvanischen Elektrode ausreichend dick bemessen ist; in diesem Fall kann also auf des Metallrohr 11 verzichtet werden.

Im Ausführungsbeispiel erstreckt sich der elektrisch nicht-leitende Teil 12 unter Bildung eines zylinderförmigen Ansatzes 13 durch eine in der Rohrwand des Metallrohrs 11 angebrachte Bohrung 14 hindurch. Diese hat bevorzugt einen konstanten Durchmesser. Der Ansatz 13 hat eine weitere Bohrung 15 mit einem gegenüber dem Durchmesser der Bohrung 14 kleineren konstanten Durchmesser.

In der Figur ist in der Bohrung 15 ein Elektrodenschaft 41 einer die Flüssigkeit berührenden Elektrode 4 3 angeordnet, der darin derart eingesetzt ist, daß eine Stirnfläche 42 des Elektrodenschafts 41 von der Flüssigkeit im Betrieb benetzt ist und die Impedanz der Elektrode gegenüber den Eigenschaften und/oder gegenüber dem, insb. momentanen, Zustand der Flüssigkeit und/oder gegenüber dem Meßrohr, insb. der kapazitive Anteil der Impedanz, konstant ist.

Wie Untersuchungen nämlich gezeigt haben, muß diese Impedanz und insb. deren kapazitiver Anteil von in der strömenden Flüssigkeit auftretenden Druckänderungen und auch von Druck- oder Schlagbelastungen unabhängig sein, die von außen auf das Meßrohr 1 einwirken.

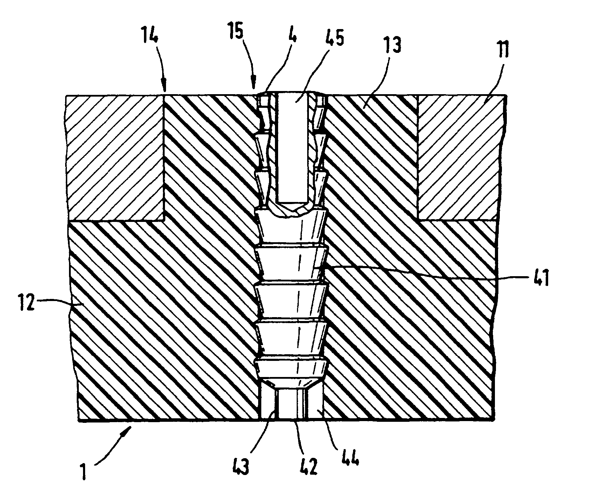

In der Figur 1 hat die galvanische Elektrode 4 einen Elektrodenschaft 41 und eine Stirnfläche 42. Zusätzlich hierzu ist eine bei allen Betriebsbedingungen konstant bleibende Fläche 43 des Elektrodenschafts 41 von der Flüssigkeit dauernd benetzt.

Dazu ist in der Figur zwischen dem Elektrodenschaft 41 und der Bohrung 15 ein so ausreichend weiter Spalt 44 vorgesehen, daß die Flüssigkeit unter allen Betriebsbedingungen und bei allen Zuständen der Flüssigkeit in ihn vollständig eindringen kann.

Dabei kann in Ausgestaltung der Erfindung das Material des elektrisch nicht-leitenden Teils 12 eine so geringe Oberflächenspannung haben, daß die Flüssigkeit in den Spalt 44 vollständig eindringt, wobei die Oberfläche des Elektrodenschafts 41 bevorzugt eine die Oberflächenspannung erniedrigende Schicht aufweisen kann.

Der nichtbenetzte Teil des Elektrodenschafts 41 ist in die Bohrung 15 flüssigkeitsdicht eingesetzt, wozu die üblichen Maßnahmen zu ergreifen sind. Eine davon ist in der Figur gezeigt, nämlich den Elektrodenschaft 41 mit hintereinander liegenden kegelstumpf-förmigen Abschnitten zu versehen, in denen sich das Material, in dem die Bohrung 15 angebracht ist, verkrallt.

In der Figur hat der Elektrodenschaft 41 an seinem von der Stirnfläche 42 abgewandten Ende eine Buchse 45 zum Anschluß einer Zuleitung zur Elektrode 4. Selbstverständlich ist auch jede andere übliche Art der Verbindung der Zuleitung mit der Elektrode möglich.

## Patentansprüche

1. Durchflussaufnehmer eines magnetisch-induktiven Durchflussmessers zum Messen eines Volumendurchflusses einer elektrisch leitenden, in einem Messrohr (1) des Durchflussaufnehmers strömenden Flüssigkeit, der ferner mindestens zwei galvanische Elektroden (4); mit einer im Betrieb die Flüssigkeit berührender Stirnfläche (42) und einem in einer Wand des Messrohrs (1) flüssigkeitsdicht eingesetzten Elektrodenschaft (41) umfaßt,
- wobei ein die Flüssigkeit berührender Teil (12) des Messrohrs (1) elektrisch nicht-leitend ist, und
- wobei der Elektrodenschaft (41) in einer Bohrung (15) in einem vom elektrisch nicht-leitenden Teil (12) gebildeten Ansatz (13) eingesetzt ist, der sich durch eine in einer Wand des Messrohrs (1) angeordnete Bohrung (14) hindurch erstreckt,
**dadurch gekennzeichnet, daß**
- die Elektroden (4) eine an die Stirnfläche (42) grenzende Fläche (43) aufweisen die aufgrund eines zwischen der Fläche (43) und dem elektrisch nicht-IeitendenTeil (12) vorgesehenen Spalts (44) freiliegt, so daß die zu messende Flüssigkeit, im Betrieb in den Spalt (44) eindringend, auch die an die Stirnfläche (42) grenzende Fläche (43) eines somit gebildeten Elektrodenkopfes (42,43) benetzt,
- wobei der Elektrodenschaft (41) einen Durchmesser aufweist, der größer als ein Durchmesser des die Flüssigkeit berührenden Elektrodenkopfes (42, 43) ist.

2. Durchflussaufnehmer nach einem der vorherigen Ansprüche, wobei die Fläche (43) zur angrenzenden Stirnfläche (42) senkrecht verläuft.

3. Durchflussaufnehmer nach einem der vorherigen Ansprüche, wobei der in den Ansatz (13) eingesetzte Elektrodenschaft (41) mit hintereinander liegenden kegelstumpf-förmigen Abschnitten versehen ist, in denen sich das Material des Ansatzes (13) verkrallt.

4. Durchflussaufnehmer nach einem der vorherigen Ansprüche, wobei der die Flüssigkeit berührende Teil (12) des Messrohrs (1) aus Kunststoff besteht..

5. Durchflussaufnehmer nach einem der vorherigen Ansprüche, wobei jede der Elektroden (4) eine die Oberflächenspannung erniedrigernde Schicht aufweist.

6. Durchflussaufnehmer nach einem der vorherigen Ansprüche, wobei das Meßrohr (1) ein Metallrohr (11) umfaßt, wobei der die Flüssigkeit berührende Teil (12) des Meßrohrs (1) durch eine innen im Metallrohr (11) vorgesehene elektrisch-nicht leitende Schicht gebildet ist.

## Claims

1. Flow sensor of an electromagnetic flowmeter designed to measure a volume flow of an electrically conductive liquid flowing through a measuring tube (1) of the flow sensor, further comprising at least two galvanic electrodes (4), with a front face (42) which comes in contact with liquid during operation, and an electrode shaft (41) introduced liquid-tight in a wall of the measuring tube (1),
- wherein a part (12) of the measuring tube (1) in contact with the liquid is not electrically conductive, and
- wherein the electrode shaft (41) is introduced in a section (13) formed by the non-conductive part (12), said section extending through a bore (14) arranged in a wall of the measuring tube (1),
**characterized in that**
- the electrodes (4) have a surface (43) which is adjacent to the front face (42), said surface being exposed due to a gap (44) provided between the surface (43) and the non-conductive part (12) such that the liquid to be measured penetrates the gap (44) during operation, and wets the surface (43) of an electrode head (42, 43) formed in this way, said surface being adjacent to the front face (42),
- wherein the electrode shaft (41) has a diameter which is greater than a diameter of the electrode head (42, 43) in contact with the liquid.

2. Flow sensor as claimed in one of the previous claims, wherein the surface (43) is perpendicular to the adjacent front face (42).

3. Flow sensor as claimed in one of the previous claims, wherein the electrode shaft (41) introduced in the section (13) is provided with consecutive frustum-shaped sections which the material of the section (13) grips.

4. Flow sensor as claimed in one of the previous claims, wherein the part (12) of the measuring tube (1) in contact with the liquid is made of plastic.

5. Flow sensor as claimed in one of the previous claims, wherein each of the electrodes (4) has a layer which reduces the surface tension.

6. Flow sensor as claimed in one of the previous claims, wherein the measuring tube (1) comprises a metal tube (11), wherein the part (12) of the measuring tube (1) which is in contact with the liquid is formed by a non-conductive layer provided inside the metal tube (11).

## Revendications

1. Capteur de débit d'un débitmètre magnéto-inductif destiné à la mesure d'un débit volumique d'un liquide électroconducteur circulant dans un tube de mesure (1) du capteur de débit, comprenant en outre au moins deux électrodes (4) galvaniques, avec une face frontale (42) entrant en contact, en fonctionnement, avec le liquide, et une tige d'électrode (41) introduite de façon étanche au liquide dans une paroi du tube de mesure (1),
- une partie (12) du tube de mesure (1) entrant en contact avec le liquide n'étant pas électroconductrice, et
- la tige d'électrode (41) étant introduite dans une embase (13) formée par la partie (12) non conductrice, laquelle embase s'étend à travers un alésage (14) disposé dans une paroi du tube de mesure (1),
**caractérisé en ce que**
- les électrodes (4) présentent sur la face frontale (42) une surface (43) avoisinante, qui est dégagée en raison d'une fente (44) prévue entre la surface (43) et la partie (12) non électroconductrice, si bien que le liquide à mesurer, qui pénètre dans la fente (44) en fonctionnement, humidifie également la surface (43) d'une tête d'électrode (42, 43) ainsi formée, surface avoisinant la face frontale (42),
- la tige d'électrode (41) présentant un diamètre, lequel est supérieur à un diamètre de la tête d'électrode (42, 43) en contact avec le liquide.

2. Capteur de débit selon la revendication 1, pour lequel la surface (43) s'étend de façon perpendiculaire à la face frontale (42) avoisinante.

3. Capteur de débit selon l'une des revendications précédentes, pour lequel la tige d'électrode (41) introduite dans l'embase (13) est munie de sections tronconiques situées les unes derrière les autres, dans lesquelles la matière de l'embase (13) s"'accroche".

4. Capteur de débit selon l'une des revendications précédentes, pour lequel la partie (12) en contact avec le liquide du tube de mesure (1) est en matière plastique.

5. Capteur de débit selon l'une des revendications précédentes, pour lequel chacune des électrodes (4) présente une couche réduisant la tension superficielle.

6. Capteur de débit selon l'une des revendications précédentes, pour lequel le tube de mesure (1) comprend un tube métallique (11), la partie (12) entrant en contact avec le liquide du tube de mesure (1) étant formée par une couche non électroconductrice prévue à l'intérieur du tube métallique (11).
